# FASCICULE DE BREVET EUROPEEN

(11) **EP 2 640 752 B1**
(45) Date de publication et mention de la délivrance du brevet: **26.12.2018**
(21) Numéro de dépôt: 11787841.3
(22) Date de dépôt: 18.11.2011
(51) Int. Cl.: C08B 37/16, C08B 37/02, C08B 37/08, C08B 37/00, C08B 31/00, C08J 3/075

(54) **DERIVES DE POLYSACCHARIDES COMPRENANT UN MOTIF ALCENE ET REACTION DE COUPLAGE PAR CHIMIE THIO-CLIC**
POLYSACCHARIDDERIVATE MIT EINER ALKENEINHEIT UND CHEMISCHEN THIOL-CLICK-KUPPLUNGSREAKTIONEN
POLYSACCHARIDE DERIVATIVES INCLUDING AN ALKENE UNIT AND THIOL-CLICK CHEMICAL COUPLING REACTION

(30) Priorité: 18.11.2010 FR 1059465
(43) Date de publication de la demande: 25.09.2013
(73) Titulaire: Centre National de la Recherche Scientifique (C.N.R.S.), 75016 Paris (FR); Université Joseph Fourier - Grenoble 1, 38400 Saint-Martin-d'Hères (FR)
(72) Inventeur: AUZELY, Rachel, F-38450 Le Gua (les Saillants) (FR); MERGY, Jimmy, F-38490 Aoste (FR); BAYMA-PECIT, Eric, F-38350 Saint -Honoré (FR)
(74) Mandataire: Regimbeau
(86) Numéro de dépôt international: PCT/EP2011/070483
(87) Numéro de publication internationale: WO 2012/066133

(56) Documents cités:
- EP-A1- 1 564 220
- WO-A1-2010/095057
- WO-A2-2010/011284
- ANNE L NIELSEN ET AL: "Syntheses and characterisation of novel cyclodextrin vinyl derivatives from cyclodextrin-nitrophenol-derivatives", JOURNAL OF INCLUSION PHENOMENA AND MACROCYCLIC CHEMISTRY, KLUWER ACADEMIC PUBLISHERS, DO, vol. 67, no. 3-4, 10 décembre 2009 (2009-12-10), pages 303-315, XP019821413, ISSN: 1573-1111
- TOMÁS TROJAN ET AL: "Permethylated 6I-alkenoylamino-6I-deoxy [beta]-cyclodextrin derivatives as modifiers of photoluminescence sensor response of porous silicon", JOURNAL OF INCLUSION PHENOMENA AND MACROCYCLIC CHEMISTRY, KLUWER ACADEMIC PUBLISHERS, DO, vol. 57, no. 1-4, 16 février 2007 (2007-02-16), pages 343-348, XP019502950, ISSN: 1573-1111, DOI: DOI:10.1007/S10847-006-9260-5

## Description

La présente invention concerne le domaine des polysaccharides greffés et éventuellement fonctionnalisés, les procédés permettant de les obtenir et les matériaux comprenant de tels polysaccharides. L'invention peut permettre d'accéder à de nouveaux types de matériaux, comme des hydrogels, pouvant trouver de nombreuses applications dans les domaines biologique, médical, pharmaceutique et cosmétique.

L'ingénierie des biomatériaux connaît depuis une quinzaine d'années un essor important lié notamment à l'émergence de nouvelles applications dans les domaines de la vectorisation et la reconstruction de tissus.

L'efficacité de ces matériaux, par exemple destinés à véhiculer un médicament vers un organe cible ou restaurer un tissu, repose notamment sur leur capacité à communiquer avec leur environnement.

Cette efficacité peut être liée à plusieurs paramètres incluant la nature chimique, les propriétés mécaniques des matériaux ainsi que leur aptitude à répondre à des stimuli extérieurs (pH, température, présence de biomolécules) par analogie aux systèmes vivants.

Parmi les polymères utilisés pour produire de tels systèmes, les polysaccharides (PS) d'origine naturelle constituent des candidats de choix. Ils présentent généralement des caractéristiques de biocompatibilité et de biodégradabilité satisfaisantes et peuvent de plus présenter une activité biologique.

Leur complexité chimique offre de multiples possibilités en termes de structure et/ou de propriété, et leur origine naturelle peut les rendre particulièrement attractifs d'un point de vue environnemental, toxicologique et/ou commercial.

Il est donc particulièrement souhaitable d'obtenir des nouveaux polymères d'origine naturelle modifiés, comme des polysaccharides modifiés, notamment afin d'obtenir des composés présentant des nouvelles propriétés ou des propriétés améliorées, par exemple épaississantes, gélifiantes ou dispersantes.

Ces polymères modifiés ou les dérivés de ces polymères peuvent par ailleurs être d'une grande utilité dans les domaines cosmétiques, pharmaceutiques ou biomédicaux.

Toutes ces raisons sont la cause des nombreuses synthèses de polysaccharides greffés et/ou fonctionnalisés qui sont décrites dans la littérature.

Par exemple, la demande internationale WO 2009/063082 décrit la réaction de cycloaddition (dite de "Huisgen"), entre une entité polysaccharide (guar) fonctionnalisée par des groupements alcyne et un polyéther porteur de fonctions azoture, en présence d'un catalyseur au Cuivre I. Cette réaction permet de former, de manière régiospécifique, essentiellement du 1,2,3-triazole 1-4-disubstitué.

La facilité de mise en oeuvre et la compatibilité de cette réaction avec d'autres fonctionnalités chimiques, entre autres, celles des sucres et des protéines, lui ont valu l'appellation de « chimie clic » (M. Meldal et al., Chem Rev. (2008), 108, 2952).

Cette réaction de cycloaddition a été également utilisée par Crescenzi et al. WO 2008/031525 pour préparer des réseaux tridimensionnels à base d'acide hyaluronique.

Plus particulièrement, celle-ci met en jeu une paire de polysaccharides dont l'un des deux au moins est l'acide hyaluronique. Le polysaccharide (PS) et l'acide hyaluronique portent chacun des motifs réactifs présentant par exemple un groupement azoture ou alcyne terminal conduisant selon un mécanisme de cycloaddition 1,3-dipolaire à la formation de réseaux tridimensionnels.

Cependant, cette réaction de chimie clic peut être insatisfaisante par certains aspects, par exemple en termes de toxicité et/ou de facilité de mise en oeuvre, en particulier à cause de l'élimination du Cu(I) qui est toxique *in vivo.*

Le document EP 1 564 220 décrit des procédés de réticulation chimique de l'acide hyaluronique ainsi que le couplage de groupements d'intérêt sur l'acide hyaluronique. Un groupe hydrazyl ou amino est introduit sur un polymère d'acide hyaluronique en convertissant un groupement carboxyle de l'acide hyaluronique en groupe amide ou ester N-substitué. Puis l'acide hyaluronique ainsi obtenu est dérivé avec un groupement mercapto ou un groupe comprenant une liaison insaturée. Cette réaction peut se faire spontanément dans l'eau mais elle est relativement lente (plusieurs heures) et non quantitative. Afin d'améliorer le rendement, la réaction peut être activée en présence de radicaux mais dans ce cas une polymérisation se produit et l'on obtient un gel réticulé. Cette réaction ne permet pas d'obtenir un polymère et notamment un acide hyaluronique linéaire et le taux de greffage n'est pas contrôlé.

Ainsi, même si de nombreuses synthèses de polysaccharides greffés et/ou fonctionnalisés ont été décrites dans la littérature, elles peuvent ne pas être satisfaisantes en termes de type de greffage et/ou de fonctionnalisation obtenu(s), de rendement, de simplicité de mise en oeuvre, d'innocuité, notamment du ou des solvant(s) utilisé(s) et/ou du ou des réactif(s) mis en oeuvre, de coût, d'écologie, de polyvalence et/ou d'efficacité.

Par ailleurs, les polysaccharides modifiés décrits peuvent se révéler insatisfaisants en termes de fonctionnalité, de coût, de pureté, de réactivité, et/ou d'utilisation.

Il demeure donc un besoin d'une méthode simple, efficace et sélective pour réaliser le greffage de molécules actives sur les polysaccharides et/ou leur réticulation chimique en milieu hydro-organique.

La présente invention vise précisément à proposer un nouveau procédé de fonctionnalisation de polysaccharides, notamment par des molécules actives, ou leur réticulation, qui permette de résoudre en tout ou partie les problèmes évoqués ci-dessus.

Sont également décrits de nouveaux dérivés de polysaccharides porteurs de motifs réactifs susceptibles d'être obtenus facilement et économiquement à l'échelle industrielle.

Un autre objectif de l'invention est de fonctionnaliser efficacement et sélectivement un polysaccharide porteur de motifs réactifs par des molécules ou macromolécules, notamment actives, variées et/ou de le réticuler chimiquement.

La présente invention a encore pour objectif de réaliser ces deux étapes réactionnelles dans des conditions douces, et/ou n'affectant pas ou peu la masse molaire du PS et des molécules à greffer.

Enfin l'invention a encore pour objet de fournir des biomatériaux à base de polysaccharides modifiés pouvant se présenter sous la forme de polymères linéaires greffés ou d'hydrogels pour des applications biomédicales, pharmaceutiques ou cosmétiques.

Les procédés de la présente invention comprennent le greffage d'un alcène non conjugué sur une fonction hydroxyle ou amine d'un polysaccharide et en particulier d'un acide hyaluronique. Cette réaction est une réaction contrôlée y compris en présence de radicaux permettant d'obtenir de très bons rendements. De plus le taux de greffage ou le degré de substitution (DS) peuvent être contrôlés en faisant varier la quantité de réactif.

Après le greffage de l'alcène non conjugué sur le polysaccharide, il est possible de fonctionnaliser ce polysaccharide avec une grande variété de groupements comprenant une fonction thiol par un couplage par chimie thiol-clic. Avantageusement, il est notamment possible de fonctionnaliser les polysaccharides, en particulier l'acide hyaluronique, avec des groupements hydrophobes ou tout autre groupement d'intérêt.

En faisant réagir le polysaccharide portant l'alcène non conjugué, notamment l'acide hyaluronique, avec des composés comprenant une pluralité de fonctions thiol, il est possible d'obtenir une réticulation contrôlée du polysaccharide. Ceci permet notamment d'obtenir des hydrogels réticulés d'acide hyaluronique.

Bien entendu, il est possible de combiner la fonctionnalisation et la réticulation du polysaccharide selon les procédés de l'invention.

En particulier, l'invention se rapporte à des hydrogels réticulés d'acide hyaluronique fonctionnalisés avec différents groupements d'intérêts par chimie thiol-clic.

La présente invention vise donc à résoudre les problèmes évoqués ci-dessus en tout ou partie.

### Résumé

L'invention se rapporte à un procédé de préparation d'un polysaccharide comprenant au moins un motif alcène greffé sur une fonction hydroxyle ou amine dudit polysaccharide, ledit motif alcène répondant à la formule A' suivante : 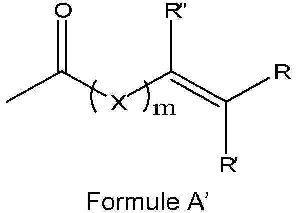 dans laquelle
m représente un nombre entier allant de 1 à 10,
X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle, notamment benzyle, et
R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, en particulier R, R' et R" représentent chacun un atome d'hydrogène, comprenant les étapes suivantes :
   a) faire réagir un anhydride d'acide de Formule A suivante 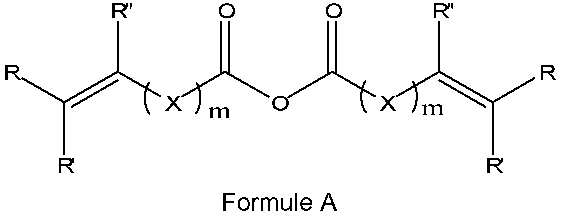 dans laquelle :
      m représente un nombre entier allant de 1 à 10,
      X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle, notamment benzyle, et
      R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, avec au moins un polysaccharide,
      dans un solvant hydro-organique comprenant de l'eau et un solvant polaire aprotique ou un solvant polaire protique,
   b) récupérer le polysaccharide comprenant un motif alcène greffé.

Dans les procédés selon l'invention, l'étape a) peut être effectuée dans un solvant comprenant de l'eau et/ou un solvant polaire aprotique, ledit solvant polaire aprotique étant choisi parmi le DMF et le DMSO.

Dans les procédés selon l'invention, l'étape a) est de préférence effectuée dans un mélange eau/DMF, eau/DMSO ou eau/isopropanol.

Dans les procédés selon l'invention, l'étape a) est de préférence effectuée dans un mélange eau/DMF ou eau/DMSO, notamment à un ratio volumique allant de 5/1 à 1/2, et en particulier de 3/2 à 1/1.

Dans les procédés selon l'invention, l'étape a) est de préférence effectuée à un pH allant de 6 à 11, notamment de 7 à 10 et en particulier de 8 à 9.

Dans les procédés selon l'invention, à l'étape a) le taux de greffage molaire est de préférence modulé par la quantité d'anhydride ajoutée.

De préférence, le polysaccharide est choisi parmi les poly(galacturonate)s, l'héparine et ses dérivés, l'acide hyaluronique et ses dérivés, les chondroïtines sulfates, la pectine et ses dérivés, les alginates, et les polysaccharides neutres tels que la cellulose, le dextrane, le pullulane, l'amidon, la maltodextrine et leurs dérivés la chitine, le chitosane et leurs dérivés.

Sont aussi décrits des polysaccharides comprenant au moins un motif alcène greffé sur une fonction hydroxyle ou amine dudit polysaccharide, ledit motif répondant à la Formule A' suivante : 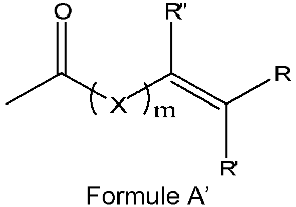 dans laquelle
m représente un nombre entier allant de 1 à 10,
X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle, notamment benzyle, et
R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, en particulier R, R' et R" représentent chacun un atome d'hydrogène.

De préférence, le polysaccharide présente un taux de greffage molaire compris entre 0,5 à (nombre de fonctions hydroxyles libres par unité de répétition du polysaccharide) 100 % par unité de répétition du polysaccharide.

De préférence, le polysaccharide est choisi parmi les poly(galacturonate)s, l'héparine et ses dérivés, l'acide hyaluronique et ses dérivés, les chondroïtines sulfates, la pectine et ses dérivés, les alginates, et les polysaccharides neutres tels que la cellulose, le dextrane, le pullulane, l'amidon, la maltodextrine et leurs dérivés la chitine, le chitosane et leurs dérivés.

Dans un mode de réalisation préféré, le polysaccharide est l'acide hyaluronique répondant à la formule (B) : 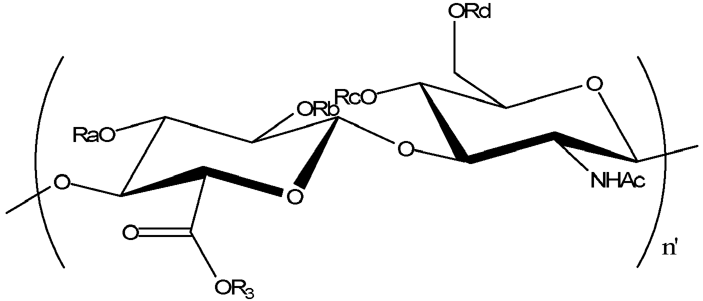 dans laquelle
n' peut aller de 10 à 10 000 et en particulier de 15 à 7 000,
R₃ représente H ou Na,
Ra, Rb, Rc et Rd représentent, indépendamment les uns des autres, H ou un motif de Formule A' tel que défini ci-dessus.

L'invention a également pour objet un procédé de préparation d'un polysaccharide fonctionnalisé par au moins un motif thioéther greffé sur une fonction hydroxyle ou amine dudit polysaccharide, ledit motif répondant à la Formule C suivante : 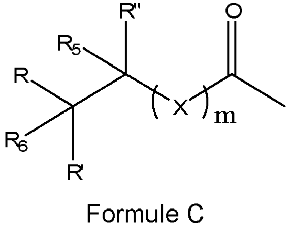 dans laquelle
m représente un nombre entier allant de 1 à 10,
X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle,
R et R' représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, en particulier R et/ou R' représentent un atome d'hydrogène,
R₅ et R₆ représentent pour l'un un atome de H et pour l'autre Rₜₕᵢₒ-S-, Rₜₕᵢₒ représentant un groupement comprenant au moins 1 atome de carbone, comprenant les étapes suivantes :
   a) préparation d'un polysaccharide comprenant au moins un motif alcène greffé sur au moins une fonction hydroxyle ou amine dudit polysaccharide selon le procédé de préparation décrit ci-dessus,
   b) faire réagir un composé thiol, Rₜₕᵢₒ-SH, via une réaction radicalaire avec le polysaccharide obtenu à l'étape précédente,
   c) récupérer le polysaccharide fonctionnalisé.
De préférence, la réaction radicalaire de l'étape b) est
- photo-amorcée, notamment par du 4-(2-hydroxyéthoxy)phényl-(2-hydroxy-2-propyl)cétone, ou
- amorcée par un amorceur soluble dans l'eau, sans UV, comme le dichlorhydrate de l'azobis-(2-méthylpropionamidine), ou le dichlorhydrate du 2,2'-Azobis[2-(2-imidazolin-2-yl)propane].

Dans les procédés selon l'invention, l'étape b) est effectuée de préférence dans un solvant choisi parmi l'eau, un mélange eau/éthanol, eau/isopropanol, eau/DMF ou eau/DMSO.

De préférence, le polysaccharide mis en oeuvre dans les procédés selon l'invention est choisi parmi les poly(galacturonate)s, l'héparine et ses dérivés, l'acide hyaluronique et ses dérivés, les chondroïtines sulfates, la pectine et ses dérivés, les alginates, et les polysaccharides neutres tels que la cellulose, le dextrane, le pullulane, l'amidon, la maltodextrine et leurs dérivés la chitine, le chitosane et leurs dérivés.

Est également décrit un polysaccharide fonctionnalisé par au moins un motif thioéther greffé sur une fonction hydroxyle ou amine dudit polysaccharide, ledit motif répondant à la Formule C suivante : 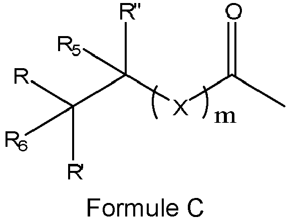 dans laquelle
m représente un nombre entier allant de 1 à 10,
X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle,
R et R' représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, en particulier R et/ou R' représentent un atome d'hydrogène,
R₅ et R₆ représentent pour l'un un atome de H et pour l'autre Rₜₕᵢₒ-S-, Rₜₕᵢₒ représentant un groupement comprenant au moins 1 atome de carbone.

De préférence, les polysaccharides obtenus par le procédé selon l'invention ont un taux de greffage en motif thioéther de Formule C compris entre 0,5 à (nombre de fonctions hydroxyles libres par unité de répétition du polysaccharide) 100 % par unité de répétition du polysaccharide.

De préférence, Rₜₕᵢₒ-S- provient de composés choisis parmi :
- les alkyles thiols, notamment les alkyles linéaires, ramifiés ou cycliques, par exemple du pentanethiol, du décanethiol,
- les aryles thiols, notamment les hétéroaryles, comprenant par exemple un atome d'azote et/ou de soufre,
- les polymères synthétiques, appartenant notamment à la famille des polyéthers, comme les poly(éthylène glycol)s, portant au moins une fonction thiol, Pluronics portant au moins une fonction thiol, à la famille des poly(*N*-alkylacrylamide)s (poly(*N*-isopropylacrylamide)) portant au moins une fonction thiol,
- les mono-, oligo- ou polysaccharides portant au moins une fonction thiol, par exemple à l'extrémité réductrice ou le long de la chaîne oligo- ou polysaccharidique,
- les peptides portant au moins une fonction thiol,
- les oligonucléotides portant au moins une fonction thiol, et
- les composés actifs, notamment les composés pharmaceutiquement actifs, portant au moins une fonction thiol,
- les stéroïdes,
- les cyclodextrines,
- les composés comprenant au moins deux fonctions thiols, notamment deux, trois, quatre, cinq ou six fonctions thiol, et
- les poly(éthylene glycol)s, en particulier présentant au moins une fonction thiol en extrémité de chaine.

De préférence, le polysaccahride est choisi parmi les poly(galacturonate)s, l'héparine et ses dérivés, l'acide hyaluronique et ses dérivés, les chondroïtines sulfates, la pectine et ses dérivés, les alginates, et les polysaccharides neutres tels que la cellulose, le dextrane, le pullulane, l'amidon, la maltodextrine et leurs dérivés la chitine, le chitosane et leurs dérivés.

Dans un mode de réalisation préféré, le polysaccharide est l'acide hyaluronique répondant à la formule (D) : 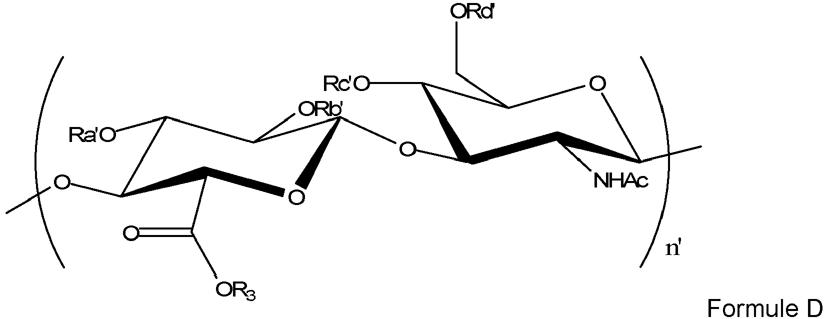 dans laquelle
n' va de 10 à 10 000, et en particulier de 15 à 7 000,
R₃ représente H ou Na, et
Ra', Rb', Rc' et Rd' représentent, indépendamment les uns des autres, H ou un motif de Formule C tel que défini ci-dessus.

Un autre objet de l'invention est un procédé de réticulation de l'acide hyaluronique comprenant les étapes suivantes :
a) préparation d'un acide hyaluronique comprenant au moins un motif alcène greffé sur au moins une fonction hydroxyle dudit acide hyaluronique selon le procédé de préparation décrit ci-dessus,
b) faire réagir un composé comprenant plusieurs fonctions thiol avec l'acide hyaluronique obtenu à l'étape précédente,
c) récupérer le polysaccharide réticulé.

De préférence, le composé comprenant plusieurs fonctions thiol est choisi parmi le poly(éthylène glycol) dithiol et le poly(éthylène) tétrathiol.

De préférence, l'étape b) comprend une irradiation UV.

Dans des modes de réalisations préférés, les procédés de réticulation du HA comprenant en outre l'hydratation de l'acide hyaluronique pour former un hydrogel.

Est également décrit l'acide hyaluronique réticulé susceptible d'être obtenu par un procédé selon l'invention et un hydrogel d'acide hyaluronique susceptible d'être obtenu par un procédé selon l'invention.

La présente invention se rapporte aussi à un procédé de préparation d'acide hyaluronique réticulé fonctionnalisé par au moins un motif thioéther comprenant la préparation d'un acide hyaluronique fonctionnalisé par un procédé de préparation selon l'invention et la réticulation de l'acide hyaluronique selon l'invention.

Est aussi décrit un acide hyaluronique réticulé fonctionnalisé susceptible d'être obtenu par un procédé selon l'invention ainsi qu'une composition pharmaceutique ou cosmétique à libération contrôlée comprenant un tel acide hyaluronique réticulé fonctionnalisé ou un polysaccharide selon l'invention ou un hydrogel d'acide hyaluronique selon l'invention.

Selon un premier aspect, l'invention a pour objet un procédé de préparation d'un polysaccharide, en particulier un acide hyaluronique, greffé avec un motif comprenant une double-liaison carbone-carbone.

Est également décrit un polysaccharide, en particulier un acide hyaluronique, greffé avec un motif comprenant une double-liaison carbone-carbone.

L'invention a aussi pour objet un procédé de préparation d'un polysaccharide, en particulier un acide hyaluronique, greffé avec un motif comprenant une double-liaison carbone-carbone fonctionnalisée par un motif thioéther.

Est également décrit un polysaccharide, en particulier un acide hyaluronique, greffé avec un motif comprenant une double-liaison carbone-carbone fonctionnalisée par un motif thioéther.

Une composition comprenant un polysaccharide greffé avec un motif comprenant une double-liaison carbone-carbone et/ou un polysaccharide greffé avec un motif comprenant une double-liaison carbone-carbone fonctionnalisée par un motif thioéther, sont également décrits.

Sont aussi décrits, un matériau comprenant au moins un polysaccharide greffé avec un motif comprenant une double-liaison carbone-carbone, au moins un polysaccharide greffé avec un motif comprenant une double-liaison carbone-carbone fonctionnalisée par un motif thioéther, au moins une composition comprenant un polysaccharide greffé avec un motif comprenant au moins une double-liaison carbone-carbone et/ou un polysaccharide greffé avec un motif comprenant une double-liaison carbone-carbone fonctionnalisée par un motif thioéther.

### Description détaillée de l'invention

Dans la présente description, l'expression « motif comprenant une double-liaison carbone-carbone » est équivalente à l'expression « motif alcène », l'expression « greffé par un motif comprenant une double-liaison carbone-carbone » est équivalente à l'expression « greffé alcène », l'expression « motif comprenant une double-liaison carbone-carbone fonctionnalisée par un motif thioéther » est équivalente à l'expression « motif alcène greffé thioéther » et l'expression « greffé par un motif comprenant une double-liaison carbone-carbone fonctionnalisée par un motif thioéther » est équivalente à l'expression « greffé alcène fonctionnalisée thioéther » ou « fonctionnalisé par un motif thioéther ».

L'invention se rapporte à un procédé de préparation d'un polysaccharide comprenant au moins un motif alcène greffé sur une fonction hydroxyle ou amine dudit polysaccharide, ledit motif alcène répondant à la formule A' suivante : 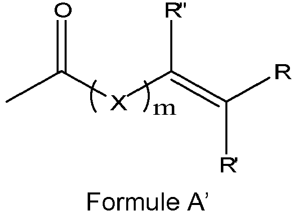 dans laquelle
m représente un nombre entier allant de 1 à 10,
X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle, notamment benzyle, et
R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, en particulier R, R' et R" représentent chacun un atome d'hydrogène, comprenant les étapes suivantes :
   a) faire réagir un anhydride d'acide de Formule A suivante 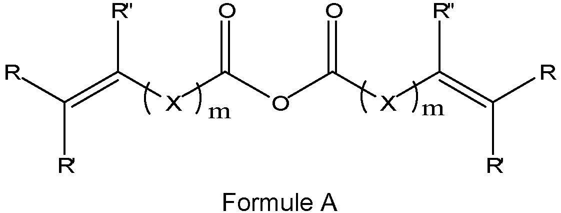 dans laquelle :
      m représente un nombre entier allant de 1 à 10,
      X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle, notamment benzyle, et
      R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, avec au moins un polysaccharide,
      dans un solvant hydro-organique comprenant de l'eau et un solvant polaire aprotique ou un solvant polaire protique,
   b) récupérer le polysaccharide comprenant un motif alcène greffé.

Selon un premier aspect, l'invention a pour objet un procédé de préparation de polysaccharide, encore appelé PS, greffé avec un motif comprenant au moins une double-liaison carbone-carbone comprenant au moins les étapes suivantes consistant à :
a) faire réagir un anhydride d'acide de Formule A suivante 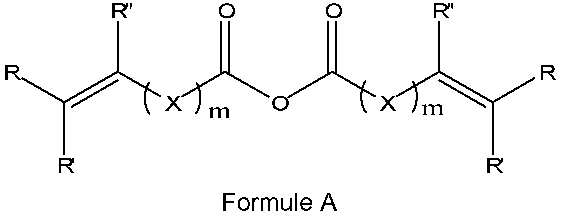 dans laquelle :
   - m représente un nombre entier allant de 1 à 10,
   - X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, éventuellement substitué, ou un groupement arylalkyle, notamment benzyle, et
   - R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, éventuellement substitué, ou un groupement arylalkyle, notamment benzyle,
   avec au moins un polysaccharide,
   dans un solvant comprenant, voire consistant en :
   de l'eau et/ou un solvant polaire aprotique, en particulier ledit solvant polaire aprotique est choisi parmi le DMF et le DMSO, et
b) récupérer le polysaccharide greffé avec un motif comprenant au moins une double-liaison carbone-carbone.

L'anhydride d'acide peut répondre à la Formule A dans laquelle m représente un nombre entier allant de 2 à 6, en particulier de 4 à 5.

L'anhydride d'acide peut répondre à la Formule A dans laquelle X représente CH₂.

L'anhydride d'acide peut répondre à la Formule A dans laquelle R, R' et R" représentent chacun un atome d'hydrogène.

Selon un mode de réalisation particulier, l'anhydride d'acide répond à la Formule A dans laquelle :
- m représente un nombre entier allant de 2 à 6, en particulier de 4 à 5,
- X représente CH₂, et
- R, R' et R" représentent chacun un atome d'hydrogène.

L'anhydride peut réagir en particulier avec le polysaccharide sur des fonctions alcool (hydroxyles) et/ou des fonctions amines, de préférence sur des fonctions amines primaires. Ainsi, le motif comprenant au moins une double-liaison carbone-carbone (motif alcène) peut être lié au polysaccharide par une liaison ester ou amide.

Dans les procédés selon l'invention, l'étape a) peut être effectuée dans un solvant comprenant de l'eau et/ou un solvant polaire aprotique, ledit solvant polaire aprotique étant choisi parmi le DMF et le DMSO.

Dans les procédés selon l'invention, l'étape a) est de préférence effectuée dans un mélange eau/DMF, eau/DMSO ou eau/isopropanol.

En particulier, l'étape a) est effectuée dans un mélange eau/isopropanol à un ratio volumique allant de 5/1 à 1/2, de préférence de 3/2 à 1/1 et plus préférentiellement dans un ratio volumique de 3/2.

En particulier, l'étape a) est effectuée dans un mélange eau/DMF ou eau/DMSO, notamment à un ratio volumique allant de 5/1 à 1/2, de préférence de 3/2 à 1/1 et plus préférentiellement dans un ratio volumique de 3/2.

La réaction de l'étape a) peut être effectuée à un pH allant de 6 à 11, notamment de 7 à 10 et en particulier de 8 à 9.

La réaction de l'étape a) peut être effectuée à une température allant de allant de 0 à 50°C, notamment d'environ de 4 à 20 °C.

Le taux de greffage molaire peut aller de 0,5 à (nombre de fonctions hydroxyles libres par unité de répétition du polysaccharide) x 100 %, en particulier de 0,5 à 400 %, notamment de 2 à 250 %, en particulier de 5 à 100 %, tout particulièrement de 7 à 75 %, voire de 7 à 50 % par unité de répétition du polysaccharide.

En particulier le taux de greffage molaire maximum correspond au nombre de fonctions hydroxyles libres par unité de répétition du polysaccharide x 100.

Le taux de greffage molaire s'entend du nombre de moles de motif de greffage par mole d'unité de répétition du polysaccharide.

Dans les procédés selon l'invention, à l'étape a) le taux de greffage molaire est de préférence modulé par la quantité d'anhydride ajoutée.

Le polysaccharide peut être choisi parmi les poly(galacturonate)s, l'héparine et ses dérivés, l'acide hyaluronique et ses dérivés, les chondroïtines sulfates, la pectine et ses dérivés, les alginates, et les polysaccharides neutres tels que la cellulose, le dextrane, le pullulane, l'amidon, la maltodextrine et leurs dérivés la chitine, le chitosane et leurs dérivés.

Par « dérivé », on entend au sens de la présente invention un composé qui se déduit d'un autre par une simple addition ou une substitution. Dans le cas présent un polysaccharide 1 dérivé d'un polysaccharide 2 peut présenter des fonctions hydroxyles substitués ou modifiées en autres fonctions. Par exemple des fonctions hydroxyles peuvent être transformées en fonctions esters, ou amides, ou encore des fonctions hydroxyles peuvent être protégées, notamment par des groupements protecteurs, en particulier tels que défini dans Green's Protective Groups in Organic Synthesis 4th ed. Tout particulièrement un dérivé comprend moins de 20 % en nombre de fonctions modifiées.

Le polysaccharide peut comprendre un nombre d'unité de répétition allant de 10 à 25 000, notamment de 15 à 15 000.

De préférence, le polysaccharide est un acide hyaluronique ou un dérivé de l'acide hyaluronique.

Selon un mode de réalisation particulier, le procédé de préparation comprend au moins les étapes suivantes consistant à :
a') faire réagir un anhydride d'acide de Formule A suivante 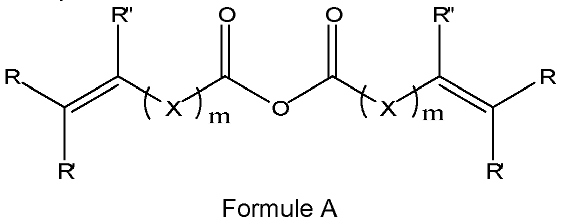 dans laquelle :
   - m représente un nombre entier allant 1 à 10,
   - X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, éventuellement substitué, ou un groupement arylalkyle, notamment benzyle,
   - R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, éventuellement substitué, ou un groupement arylalkyle, notamment benzyle,
   avec l'acide hyaluronique,
   dans un solvant comprenant, voire consistant en :
   de l'eau et/ou un solvant polaire aprotique, en particulier ledit solvant polaire aprotique est choisi parmi le DMF et le DMSO, et
b') récupérer l'acide hyaluronique greffé avec un motif comprenant au moins une double-liaison carbone-carbone.

Les conditions réactionnelles peuvent être telles que définies ci-dessus.

L'acide hyaluronique peut en particulier présenter un nombre d'unité de répétition allant de 7 à 15 000, et en particulier de 15 à 7 000.

Sont également décrits les polysaccharides greffés avec un motif alcène susceptibles d'être obtenus selon les procédés de l'invention.

Sont décrits en particulier les polysaccharides comprenant au moins un motif alcène greffé sur une fonction hydroxyle ou amine (de préférence amine primaire) dudit polysaccharide, ledit motif répondant à la Formule A' suivante : 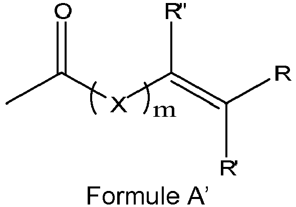 dans laquelle
m représente un nombre entier allant de 1 à 10,
X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle, notamment benzyle, et
R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, en particulier R, R' et R" représentent chacun un atome d'hydrogène.

Le motif comprenant au moins une double-liaison carbone-carbone peut répondre à la Formule A' dans laquelle m représente un nombre entier allant de 2 à 6, en particulier de 4 à 5.

Le motif comprenant au moins une double-liaison carbone-carbone peut répondre à la Formule A' dans laquelle X représente CH₂.

Le motif comprenant au moins une double-liaison carbone-carbone peut répondre à la Formule A' dans laquelle R, R' et R" représentent chacun un atome d'hydrogène.

Selon un mode de réalisation particulier, le motif comprenant au moins une double-liaison carbone-carbone répond à la Formule A' dans laquelle :
- m représente un nombre entier allant de 2 à 6, en particulier de 4 à 5,
- X représente CH₂, et
- R, R' et R" représentent chacun un atome d'hydrogène.

Le motif comprenant au moins une double-liaison carbone-carbone peut en particulier être présent sur le polysaccharide sur des fonctions alcool et/ou des fonctions amines, en particulier primaires. Ainsi, le motif peut être lié au polysaccharide par une liaison ester ou amide.

Le taux de greffage molaire peut aller de 0,5 à (nombre de fonctions hydroxyles libres par unité de répétition du polysaccharide) x 100 %, en particulier de 0,5 à 400 %, notamment de 2 à 250 %, en particulier de 5 à 100 %, tout particulièrement de 7 à 75 %, voire de 7 à 50 % par unité de répétition du polysaccharide.

Le taux de greffage s'entend du nombre de moles de substituant comprenant au moins une double-liaison carbone-carbone par mole d'unité de répétition du polysaccharide.

De préférence, le polysaccharide est choisi parmi les poly(galacturonate)s, l'héparine et ses dérivés, l'acide hyaluronique et ses dérivés, les chondroïtines sulfates, la pectine et ses dérivés, les alginates, et les polysaccharides neutres tels que la cellulose, le dextrane, le pullulane, l'amidon, la maltodextrine et leurs dérivés la chitine, le chitosane et leurs dérivés.

Le polysaccharide peut comprendre un nombre d'unité de répétition allant de 10 à 25 000, notamment de 15 à 15 000.

Selon un mode de réalisation préféré, le polysaccharide est le dextrane ou un dérivé du dextrane.

Selon un mode de réalisation préféré, le polysaccharide est de l'acide hyaluronique ou un dérivé de l'acide hyaluronique, en particulier présentant un nombre d'unité de répétition allant de 7 à 15 000, et en particulier de 15 à 7 000.

Dans un mode de réalisation préféré, le polysaccharide est l'acide hyaluronique répondant à la formule (B) : 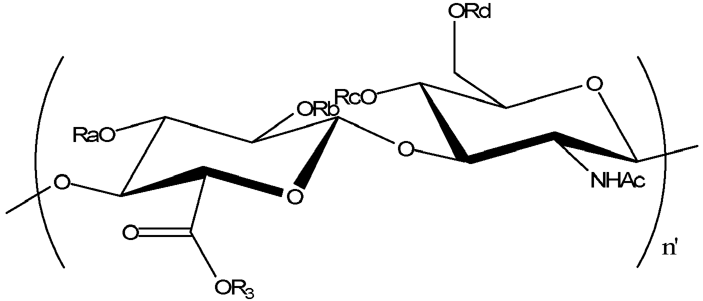 dans laquelle
n' peut aller de 10 à 10 000 et en particulier de 15 à 7 000,
R₃ représente H ou Na,
Ra, Rb, Rc et Rd représentent, indépendamment les uns des autres, H ou un motif de Formule A' tel que défini ci-dessus.

L'invention a également pour objet un procédé de préparation d'un polysaccharide fonctionnalisé par au moins un motif thioéther greffé sur une fonction hydroxyle ou amine dudit polysaccharide, ledit motif répondant à la Formule C suivante : 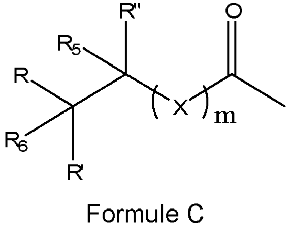 dans laquelle
m représente un nombre entier allant de 1 à 10,
X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle,
R et R' représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, en particulier R et/ou R' représentent un atome d'hydrogène,
R₅ et R₆ représentent pour l'un un atome de H et pour l'autre Rₜₕᵢₒ-S-, Rₜₕᵢₒ représentant un groupement comprenant au moins 1 atome de carbone,
comprenant les étapes suivantes :
   a) préparation d'un polysaccharide comprenant au moins un motif alcène greffé sur au moins une fonction hydroxyle ou amine dudit polysaccharide selon le procédé de préparation décrit ci-dessus,
   b) faire réagir un composé thiol, Rₜₕᵢₒ-SH, via une réaction radicalaire avec le polysaccharide obtenu à l'étape précédente,
   c) récupérer le polysaccharide fonctionnalisé.
Typiquement, la réaction de l'étape b) est une réaction radicalaire.
Avantageusement, la réaction radicalaire de l'étape b) est
- photo-amorcée, notamment par du 4-(2-hydroxyéthoxy)phényl-(2-hydroxy-2-propyl)cétone, ou
- amorcée par un amorceur soluble dans l'eau, sans UV, comme le dichlorhydrate de l'azobis-(2-méthylpropionamidine), ou le dichlorhydrate du 2,2'-Azobis[2-(2-imidazolin-2-yl)propane].

Dans les procédés selon l'invention, l'étape b) est effectuée de préférence dans un solvant choisi parmi l'eau, un mélange eau/éthanol, eau/isopropanol, eau/DMF ou eau/DMSO.

L'étape b) peut être effectuée après purification, notamment du type précipitation ou ultra-filtration. L'étape b) peut comprendre une irradiation aux UV, notamment à une longueur d'onde de 365 nm. La réaction radicalaire de l'étape b) peut être photo-amorcée, notamment par du 4-(2-hydroxyéthoxy)phényl-(2-hydroxy-2-propyl)cétone, commercialisé sous le nom Irgacure 2959, ou être amorcée par un amorceur soluble dans l'eau, sans UV, comme par exemple le dichlorhydrate de l'azobis-(2-méthylpropionamidine), commercialisé sous le nom V-50 par Wako ou le dichlorhydrate du 2,2'-Azobis[2-(2-imidazolin-2-yl)propane], commercialisé sous le nom V-044 par Wako.

Cette réaction peut être effectuée dans un solvant choisi parmi l'eau, un mélange eau/éthanol, eau/isopropanol, eau/DMF ou eau/DMSO notamment à un ratio volumique allant de 4/1 à 1/1.

La réaction de l'étape b) peut être effectuée sur une durée allant de 1 à 120 min., notamment de 1 à 60 min., en particulier de 1 à 20 min lorsque un photoamorceur est utilisé.

Lorsque la réaction est amorcée avec un amorceur de type azo hydrosoluble, la réaction peut être effectuée sur une durée allant de 4 à 24 h.

Le motif comprenant au moins une double-liaison carbone-carbone peut être fonctionnalisé avec un ou plusieurs composés thiols. Lorsque plusieurs composés thiols sont utilisés, ils peuvent être additionnés soit séquentiellement, soit en étant ajoutés et mis à réagir en même temps.

En particulier deux ou trois composés thiols d' « intérêt » peuvent être utilisés. En particulier, ces thiols d'intérêt peuvent interagir entre eux, notamment après greffage, en particulier afin d'obtenir une fonctionnalisation « complexe » à plusieurs composantes.

Tout particulièrement, selon la réactivité du composé thiol celui-ci peut être utilisé en quantité équimolaire ou en excès, par exemple de 1 à 3 équivalents molaires par rapport à la double liaison carbone-carbone.

Le composé thiol, Rₜₕᵢₒ-SH, peut être tout type de thiol. Rₜₕᵢₒ représente un groupement comprenant au moins un atome de carbone et plus particulièrement au moins un atome de carbone lié à la fonction -SH. Il peut par exemple être choisi parmi :
- les alkyles thiols, notamment les alkyles linéaires, ramifiés ou cycliques, par exemple du pentanethiol, du décanethiol,
- les aryles thiols, notamment les hétéroaryles, comprenant par exemple un atome d'azote et/ou de soufre,
- les polymères synthétiques, appartenant notamment à la famille des polyéthers, comme les poly(éthylène glycol)s, portant au moins une fonction thiol, Pluronics portant au moins une fonction thiol, à la famille des poly(*N*-alkylacrylamide)s, comme le (poly(*N-*isopropylacrylamide)), portant au moins une fonction thiol,
- les mono-, oligo- ou polysaccharides portant au moins une fonction thiol, par exemple à l'extrémité réductrice ou le long de la chaîne oligo- ou polysaccharidique,
- les peptides portant au moins une fonction thiol,
- les oligonucléotides au moins une fonction thiol,
- les composés comprenant au moins deux fonctions thiols, notamment deux, trois, quatre, cinq ou six fonctions thiol, et
- les composés actifs, notamment les composés pharmaceutiquement actifs, portant au moins une fonction thiol.

Par exemple le composé thiol peut être un stéroïde, notamment l'alpha-thiocholéstérol, un oligo- ou un polypeptide, notamment comprenant de la sérine.

Le thiol Rₜₕᵢₒ-SH peut encore être un dérivé des composés cités ci-dessus, mais aussi par exemple être un dérivé de :
- stéroïde, comme le cholestérol,
- peptide, par exemple comprenant la séquence d'aminoacide arginine-glycine-acide aspartique, Arg-Gly-Asp, appelée plus communément RGD,
- de cyclodextrine, comme le 6^{l}-amino-6^{l}-deoxycyclomaltoheptaose.

Les dérivés thiols Rₜₕᵢₒ-SH, en particulier de molécules d'intérêt, peuvent être obtenus en greffant une fonction thiol, par exemple :
- par greffage de la cystéamine, notamment avec des composés portant une fonction acide carboxylique, ou
- par greffage de l'acide mercaptopropionique, notamment avec des composés portant une fonction alcool ou amine.

La présence de ces motifs réactifs sur le polysaccharide permet le greffage efficace et contrôlé en milieu aqueux de molécules ou macromolécules actives variées et/ou sa réticulation chimique via une réaction « thiol-clic ».

Cette réaction est orthogonale à une grande variété de groupements fonctionnels, ce qui permet par exemple d'incorporer physiquement des biomolécules ou biomacromolécules complexes (médicaments, peptides), voire des cellules dans le mélange réactionnel pendant la synthèse des biomatériaux à base de polysaccharide.

Selon un autre aspect, l'invention a pour objet un procédé de préparation de polysaccharide greffé fonctionnalisée par un motif thioéther comprenant au moins les étapes suivantes consistant à :
- faire réagir un composé thiol, Rₜₕᵢₒ-SH, avec un polysaccharide greffé avec un motif comprenant au moins une double-liaison carbone-carbone via une réaction radicalaire, en particulier avec un acide hyaluronique greffé tel que décrit ci-dessus,
- récupérer le polysaccharide fonctionnalisé par un thioéther, notamment de Formule C.

Tout particulièrement ce procédé est effectué à la suite du procédé de préparation polysaccharide greffé avec un motif comprenant au moins une double-liaison carbone-carbone tel que décrit ci-dessus.

De préférence, le polysaccharide mis en oeuvre dans les procédés décrits ci-dessus est choisi parmi les poly(galacturonate)s, l'héparine et ses dérivés, l'acide hyaluronique et ses dérivés, les chondroïtines sulfates, la pectine et ses dérivés, les alginates, et les polysaccharides neutres tels que la cellulose, le dextrane, le pullulane, l'amidon, la maltodextrine et leurs dérivés la chitine, le chitosane et leurs dérivés. Le polysaccharide peut comprendre un nombre d'unité de répétition allant de 10 à 25 000, notamment de 15 à 15 000.

Dans un mode de réalisation préféré, le polysaccharide est choisi parmi l'acide hyaluronique et ses dérivés et le dextrane et ses dérivés.

Tout particulièrement, l'invention a pour objet un procédé de préparation d'acide hyaluronique greffé fonctionnalisé par un motif comprenant au moins une double liaison carbone-carbone comprenant au moins les étapes suivantes consistant à :
c) faire réagir un composé thiol, notamment du type Rₜₕᵢₒ-SH, en particulier comprenant au moins 3 atomes de carbone avec un acide hyaluronique greffé avec un motif comprenant un motif comprenant au moins une double liaison carbone-carbone, en particulier avec un acide hyaluronique greffé tel que décrit ci-dessus,
d) récupérer l'acide hyaluronique fonctionnalisé par un thioéther, notamment par un thioéther de Formule C, et en particulier l'acide hyaluronique est l'acide hyaluronique de Formule D ci-dessous.

Est également décrit un polysaccharide fonctionnalisé par au moins un motif thioéther greffé sur une fonction hydroxyle ou amine dudit polysaccharide, ledit motif répondant à la Formule C suivante : 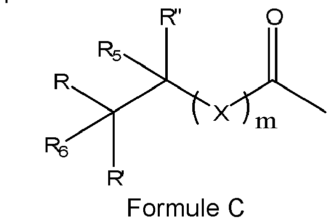 dans laquelle
m représente un nombre entier allant de 1 à 10,
X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle,
R et R' représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, en particulier R et/ou R' représentent un atome d'hydrogène,
R₅ et R₆ représentent pour l'un un atome de H et pour l'autre Rₜₕᵢₒ-S-, Rₜₕᵢₒ représentant un groupement comprenant au moins 1 atome de carbone.

Encore décrit est un polysaccharide greffé alcène fonctionnalisé par un groupement thioéther, ledit alcène fonctionnalisé par un groupement thioéther répond à la Formule C suivante : 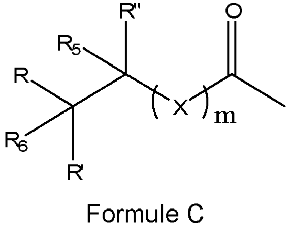 dans laquelle
- m représente un nombre entier allant de 1 à 10,
- X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, éventuellement substitué, ou un groupement arylalkyle, notamment benzyle,
- R et R' représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, éventuellement substitué, ou un groupement arylalkyle, notamment benzyle, en particulier R et/ou R' représentent un atome d'hydrogène, et
- R₅ et R₆ représentent pour l'un un atome de H et pour l'autre Rₜₕᵢₒ-S-, Rₜₕᵢₒ représentant un groupement comprenant au moins 1 atome de carbone.

Le groupement Rₜₕᵢₒ-S- peut être présent sur le carbone le moins substitué de la Formule C, en particulier R₆ représente Rₜₕᵢₒ-S- et R₅ représente H.

En particulier, ledit alcène fonctionnalisé par un groupement thioéther répond à la Formule C' suivante : 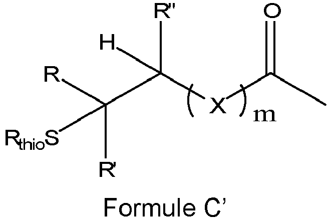 dans laquelle R, R', R", Rₜₕᵢₒ-S-, X et m sont tels que définis ci-dessus pour la Formule C.

Tout particulièrement R et/ou R' représente(nt) H.

Rₜₕᵢₒ-S- peut être un groupement dérivé d'un composé thiol tel que défini dans la présente description ou encore être un polymère.

Le polysaccharide greffé et fonctionnalisé peut présenter un taux de greffage en motif comprenant une double liaison carbone-carbone fonctionnalisée de Formule C allant 0,5 à (nombre de fonctions hydroxyles libres par unité de répétition du polysaccharide) x 100 %, en particulier de 0,5 à 400 %, notamment de 2 à 250 %, en particulier de 5 à 100 %, tout particulièrement de 7 à 75 %, voire de 7 à 50 % par unité de répétition du polysaccharide.

Tout particulièrement, tous les motifs comprenant une double liaison carbone-carbone sont fonctionnalisés. La fonctionnalisation pouvant être faite par un ou plusieurs thiols différents.

Le groupement Rₜₕᵢₒ-S- provenant du composé thiol peut provenir de tout type de thiol. Ce groupement Rₜₕᵢₒ-S- provenant composé thiol peut provenir de composés tels que décrit ci-dessus ou des composés choisis parmi :
- les alkyles thiols, notamment les alkyles linéaires, ramifiés ou cycliques, par exemple du pentanethiol, du décanethiol,
- les aryles thiols, notamment les hétéroaryles, comprenant par exemple un atome d'azote et/ou de soufre,
- les polymères synthétiques, appartenant notamment à la famille des polyéthers, comme les poly(éthylène glycol)s, portant au moins une fonction thiol, Pluronics portant au moins une fonction thiol, à la famille des poly(*N*-alkylacrylamide)s (poly(*N-*isopropylacrylamide)) portant au moins une fonction thiol,
- les mono-, oligo- ou polysaccharides portant au moins une fonction thiol, par exemple à l'extrémité réductice ou le long de la chaîne oligo- ou polysaccharidique,
- les peptides portant au moins une fonction thiol,
- les oligonucléotides au moins une fonction thiol,
- les composés comprenant au moins deux fonctions thiols, notamment deux, trois, quatre, cinq ou six fonctions thiol, et
- les composés actifs, notamment les composés pharmaceutiquement actifs, portant au moins une fonction thiol.

Par exemple le groupement Rₜₕᵢₒ-S- dérivé du composé thiol peut provenir d'un stéroïde, notamment l'alpha-thiocholestérol, un oligo- ou un polypeptide.

Le thiol peut encore être un dérivé des composés cités ci-dessus, mais aussi par exemple être un dérivé de :
- stéroïde, comme le cholestérol,
- peptide, par exemple comprenant la séquence d'aminoacide arginine-glycine-acide aspartique, Arg-Gly-Asp, appelée plus communément RGD,
- de cyclodextrine, comme le 6^{l}-amino-6^{l}-deoxycyclomaltoheptaose.

Les dérivés thiols, en particulier de molécules d'intérêt, peuvent être obtenus en greffant une fonction thiol, par exemple :
- par greffage de la cystéamine, notamment avec des composés portant une fonction acide carboxylique, ou
- par greffage de l'acide mercaptopropionique, notamment avec des composés portant une fonction alcool ou amine.

Plus généralement, le groupement Rₜₕᵢₒ-S- dérivé du composé thiol peut provenir de tout type de thiol, en particulier tel que décrit dans la présente description.

Le polysaccharide est tel que défini dans la présente invention. De préférence, le polysaccharide est le dextrane ou un dérivé du dextrane. De préférence, le polysaccharide est l'acide hyaluronique ou dérivé de l'acide hyaluronique.

Dans un mode de réalisation préféré, le polysaccharide est l'acide hyaluronique répondant à la formule (D) : 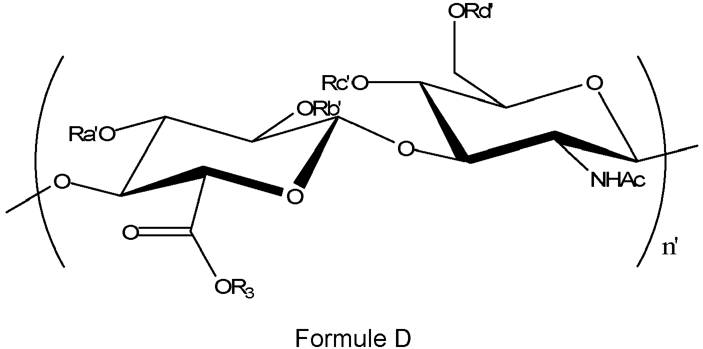 dans laquelle
n' va de 10 à 10 000, et en particulier de 15 à 7 000,
R₃ représente H ou Na, et
Ra', Rb', Rc' et Rd' représentent, indépendamment les uns des autres, H ou un motif de Formule C tel que défini ci-dessus.

En particulier ledit motif de Formule C est présent à taux de greffage molaire allant de 0,5 à 400 %, notamment de 2 à 250 %, en particulier de 5 à 100 %, tout particulièrement de 7 à 75 %, voire de 7 à 50 % par unité de répétition de l'acide hyaluronique.

La fonctionnalisation peut être faite par un ou plusieurs thiols différents.

Lorsque le procédé selon l'invention est effectué avec un composé thiol comprenant plusieurs fonctions thiols, le procédé conduit à une réticulation du polysaccharide.

Selon un autre mode de réalisation particulier le composé thiol Rₜₕᵢₒ-SH comprend plusieurs fonctions thiols, notamment 1, 2, 3 ou 4. Il peut par exemple s'agir de dérivés de poly(éthylene glycol)s commercialisés par Shearwater (http://www.creativepegworks.com). Le composé thiol peut être :
- un composé de type CZ₄₋ᵣ(O(CH₂CH₂O)_{q}CH₂CH₂SH)ᵣ dans lequel Z représente H ou un groupe alkyle, notamment comprenant de 1 à 18 atomes de carbone, q représente un nombre entier allant de 2 à 150, notamment de 4 à 100, et en particulier de 5 à 75, et r représente un nombre entier allant de 1 à 4, ou
- un composé de type HSCH₂CH₂O(CH₂CH₂O)ₛCH₂CH₂SH dans lequel s représente un nombre entier allant de 10 à 500, notamment de 20 à 250, tout particulièrement de 25 à 150.

Ainsi, un autre objet de l'invention est un procédé de réticulation de l'acide hyaluronique comprenant les étapes suivantes :
a) préparation d'un acide hyaluronique comprenant au moins un motif alcène greffé sur au moins une fonction hydroxyle dudit acide hyaluronique selon le procédé de préparation décrit ci-dessus,
b) faire réagir un composé comprenant plusieurs fonctions thiol avec l'acide hyaluronique obtenu à l'étape précédente,
c) récupérer l'acide hyaluronique réticulé.

De préférence, le composé comprenant plusieurs fonctions thiol est choisi parmi le poly(éthylène glycol) dithiol et le poly(éthylène) tétrathiol.

Avantageusement l'étape b) s'effectue via une réaction radicalaire. De préférence, l'étape b) comprend une irradiation UV.

Dans des modes de réalisations préférés, les procédés de réticulation du HA comprenant en outre l'hydratation de l'acide hyaluronique pour former un hydrogel.

Sont également décrits l'acide hyaluronique réticulé susceptible d'être obtenu par un procédé selon l'invention et un hydrogel d'acide hyaluronique susceptible d'être obtenu par un procédé selon l'invention.

La présente invention se rapporte aussi à un procédé de préparation d'acide hyaluronique réticulé fonctionnalisé par au moins un motif thioéther comprenant la préparation d'un acide hyaluronique fonctionnalisé par un procédé de préparation selon l'invention et la réticulation de l'acide hyaluronique selon l'invention.

Est également décrit un acide hyaluronique réticulé fonctionnalisé susceptible d'être obtenu par un procédé selon l'invention ainsi qu'une composition pharmaceutique ou cosmétique à libération contrôlée comprenant un tel acide hyaluronique réticulé fonctionnalisé, un polysaccharide fonctionnalisé selonn l'invention ou un hydrogel d'acide hyaluronique selon l'invention..

Est encore décrite une composition comprenant un polysaccharide greffé avec un motif comprenant au moins une double-liaison carbone-carbone ou un polysaccharide fonctionnalisé par un motif thioéther. Cette composition peut encore comprendre un conservateur. La présente solution peut ainsi comprendre un agent anti-oxydant et/ou un agent antibactérien, par exemple du mannitol ou de l'azoture de sodium.

Cette composition peut encore comprendre un conservateur. La présente solution peut ainsi comprendre un agent anti-oxydant et/ou un agent antibactérien, par exemple du mannitol ou de l'azoture de sodium.

Est aussi décrite une composition comprenant, voire consistant en, au moins un polysaccharide greffé avec un motif comprenant au moins une double liaison carbone-carbone et/ou au moins un polysaccharide greffé fonctionnalisé par un motif thioéther.

Encore décrit est un matériau comprenant au moins un polysaccharide greffé avec un motif comprenant au moins une double liaison carbone-carbone, au moins un polysaccharide greffé fonctionnalisé par un motif thioéther, au moins une composition comprenant au moins un polysaccharide greffé avec un motif comprenant au moins une double liaison carbone-carbone et/ou au moins un polysaccharide greffé fonctionnalisé par un motif thioéther.

Des gels chimiques en solutions peuvent encore être obtenus par mélange de polymères fonctionnels, notamment portant une ou plusieurs fonction(s) thiol, avec un polysaccharide portant un motif comprenant une double liaison carbone-carbone. Ce type de gel étant éventuellement injectable, en particulier en vue d'applications biomédicales.

Les polysaccharides greffés par un motif comprenant une double liaison carbone-carbone peuvent encore être fonctionnalisés avec des composés actifs, notamment pharmaceutiquement actifs, ou des dérivés de ces composés, portant une fonction thiol, ou avec des polymères bioactifs. Ces matériaux pouvant ainsi permettre un adressage fin de la drogue.

### Figures

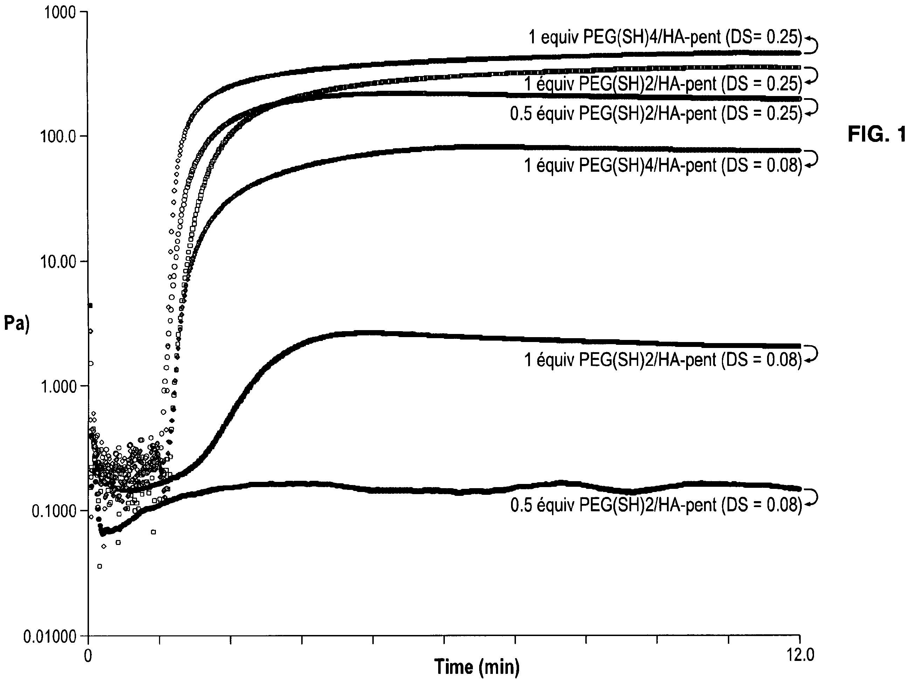

La figure 1 représente la variation du module de conservation, G', en fonction du temps à 25 °C pour différents mélanges HA-pentènoate / PEG-(SH)₄ et HA-pentènoate / PEG-(SH)₂ selon l'invention.

### Exemples

Dans les exemples suivants, les synthèses et analyses ont été effectuées en utilisant de l'eau purifiée par un système Elga Purelab avec une résistitivité de 18.2 MΩ cm.

Les polysaccharides modifiés ont été analysés par RMN ¹H afin de confirmer le greffage et la pureté des polymères finaux. Les distributions en masses molaires et masses molaires moyennes des polysaccharides modifiés ont été mesurées par chromatographie d'exclusion stérique triple détection (équipée d'un réfractomètre différentiel, d'un viscosimètre capillaire et d'un appareil de diffusion de la lumière multi-angles).

Les mesures de spectrométrie de masse basse résolution MALDI-TOF ont été réalisées avec un spectromètre Bruker Daltonics Autoflex. La matrice utilisée est l'acide 2,5-dihydrobenzoïque (DHB) à 50 mg/ml dans H₂O.

Les mesures par photorhéométrie ont été effectuées à l'aide d'un rhéomètre AR2000Ex (TA Instruments) équipé d'une cellule d'irradiation UV.

### Exemple 1 : Synthèse d'un dérivé HA-pentènoate possédant un taux de greffage de 20 %

### Procédure de greffage des groupements pentènoate sur l'acide hyaluronique à partir d'un lot de HA initial de masse M_{w} = 200000 g/mol.

L'acide hyaluronique de masse molaire moyenne en masse (Mw, g/mol) 200000 (0.200 g, 0.50 mmol) est solubilisé dans de l'eau ultrapure (10 mL) sous agitation (solution de HA à 2% w/v).

A cette solution est additionné du diméthylformamide (DMF, 6,7 mL) sous agitation (mélange eau/DMF, 3/2 (v/v)). Le pH du mélange réactionnel est ajusté à 8,3 (8 < pH < 9) par addition d'une solution aqueuse d'hydroxyde de sodium 0.5 M puis refroidi à 4°C.

L'anhydride 4-pentènoïque (0.091 g, 0.50 mmol) préalablement solubilisé dans 1 mL de DMF est alors ajouté au goutte à goutte au mélange réactionnel sous agitation.

Le pH est maintenu à 8,3 pendant 4 heures puis le mélange est placé une nuit au réfrigérateur à 4°C.

Après avoir laissé le milieu réactionnel à 4°C sous agitation pendant la nuit, la solution est transférée pour l'étape de diafiltration (membrane Amicon YM10 de seuil de coupure 10000 Da). Elle est lavée avec un mélange eau/éthanol (3/2, v/v) à 20 °C jusqu'à ce que le perméat ait une conductivité équivalente à celle de l'eau ultrapure.

Le perméat est ensuite passé à l'évaporateur rotatif afin d'éliminer l'éthanol présent.

Le polymère final est isolé après lyophilisation avec un rendement de 96%. Son taux de greffage déterminé par RMN ¹H est de 20 %.
**RMN ¹H (D₂O, 400 MHz, 80 °C,** δ **(ppm))** : 1,94 (CH₃ groupement acétyle HA), 2,32 (m, CH₂-CH=CH₂), 2,48 (m, CH₂-CO), 3,10-4,00 (m, massif des protons des sucres du squelette HA), 4,38-4,55 (m, protons anomères du HA), 5,01 (m, CH₂=), 5,83 (m, CH=).
Masse molaire moyenne en masse mesurée par SEC : M_{w} = 370000 g/mol

### Exemple 2 : Synthèse d'un dérivé dextrane-pentènoate possédant un taux de greffage de 20 %.

### Procédure de greffage des groupements pentènoate sur le dextrane à partir d'un lot de dextrane initial de masse M_{w} = 200000 g/mol.

Le dextrane de masse molaire moyenne en masse (Mw, g/mol) 200000 (0.200 g, 1.23 mmol) est solubilisé dans de l'eau ultrapure (10 mL) sous agitation (solution de dextrane à 2% w/v).

A cette solution est additionné du DMF (6,7 mL) sous agitation (mélange eau/DMF, 3/2 (v/v)). Le mélange réactionnel est refroidi à 4°C puis le pH de celui-ci est ajusté à 8,3 (8 < pH < 9) par addition d'une solution aqueuse d'hydroxyde de sodium 0.5 M.

L'anhydride 4-pentènoïque (0.091 g, 0.50 mmol) préalablement solubilisé dans 1 mL de DMF est ajouté au goutte à goutte au mélange réactionnel.

Le pH est maintenu à 8,3 pendant 4 heures puis le mélange est placé une nuit au réfrigérateur à 4°C.

Après avoir laissé le milieu réactionnel à 4 °C sous agitation pendant la nuit, la solution est transférée pour l'étape de diafiltration (membrane Amicon YM10 de seuil de coupure 10000 Da). Elle est lavée avec un mélange eau/éthanol (3/2, v/v) à 20 °C jusqu'à ce que le perméat ait une conductivité équivalente à celle de l'eau ultrapure.

Le perméat est ensuite passé à l'évaporateur rotatif afin d'éliminer l'éthanol présent.

Le polymère final est isolé après lyophilisation (24 heures) avec un rendement de 84%.

Son taux de greffage déterminé par RMN ¹H est de 20 %.
**RMN ¹H (D₂O, 400 MHz, 80 °C,** δ **(ppm))** : 2,34 (m, CH₂-CH=CH₂), 2,53 (m, CH₂-CO), 3,30-4,10 (m, massif des protons des sucres du squelette dextrane), 4,91 (m, protons anomères du HA), 5,07 (m, CH₂=), 5,82 (m, CH=).

### Exemple 3 : Synthèse d'un dérivé HA-cyclodextrine possédant un taux de greffage en β-cyclodextrine (CD) de 18 %.

### a. Synthèse de la 6^{l}-mercaptopropionylamido-6^{l}-deoxycyclomaltoheptaose.

A une solution de 6^{l}-amino-6^{l}-deoxycyclomaltoheptaose (SIGMA) (0,2g, 0,17 mmol) dans le DMF (20 mL), sous agitation et sous atmosphère d'azote, sont ajoutés successivement la *N*, *N*-diisopropyléthylamine (DIEA, 0,029 mL, 0,17 mmol) en solution dans le DMF (1 mL), le 1-hydroxybenzotriazole (HOBt, 0,046g, 0,34 mmol) et le *N,N*'-diisopropylcarbodiimide (DIC) (0,106 mL, 0,68 mmol) également en solution dans le DMF (1 mL). L'acide mercaptopropionique (MPA, 0,019 mL, 0,22 mmol) est alors ajouté au milieu réactionnel. Le mélange réactionnel est alors laissé sous agitation pendant une nuit sous atmosphère d'azote. Après évaporation de la majeure partie du DMF au rotavapor, le produit est précipité dans l'acétone (200 mL). Le précipité est alors lavé 3 fois sur fritté de porosité 5 avec 100 mL d'acétone puis séché à température ambiante pendant une nuit. La 6^{l}-mercaptopropionylamido-6^{l}-deoxycyclomaltoheptaose est obtenue sous forme de poudre blanche (0,181 g, 0,15 mmol) avec un rendement de 88%.
**RMN ¹H (D₂O, 400 MHz, 25 °C,** δ **(ppm))** : 2,53 (m, CH₂-SH, chaîne MPA), 2,67 (m, CH₂-CO, chaînon MPA), 3,13 (m, 1H, CD), 3,35 (m, 1 H, CD), 3.52-3.86 (m, H-2, H-3, H-4, H-5, H-6,6', CD), 5,0 (m, protons anomères, CD)
**MS-MALDI-TOF:** [*M*+Na]⁺ calculé pour C₄₅H₇₄O₃₅NSNa: 1244,11; Trouvé: 1244,40

### b. Couplage de la 6^{l}-mercaptopropionylamido-6^{l}-deoxycyclomaltoheptaose avec un derivé HA-pentènoate possédant un taux de greffage de 20 %.

A une solution de HA-pentènoate de masse M_{w} = 370000 g/mol possédant un taux de greffage de 20 % (synthétisé selon l'exemple 1) dans de l'eau ultrapure (2 mL) (solution de HA-pentènoate à 1 % w/v) sous agitation, on ajoute le 6^{l}-mercaptopropionylamido-6^{l}-deoxycyclomaltoheptaose (0.012 g, 0.0096 mmol). Le mélange est ensuite additionné d'une solution d'Irgacure 2959 à 1 % (w/v) dans le PBS (0,1 mL, tampon phosphate salin, NaCl 0,15 M, pH 7,4). Le mélange réactionnel est alors transféré dans une cellule en quartz et irradié pendant 5 minutes à une longueur d'onde λ = 365 nm.

La solution est ensuite transférée pour l'étape de diafiltration (membrane Amicon YM10 de seuil de coupure 10000 Da) et lavée avec de l'eau ultrapure à 20 °C jusqu'à ce que le perméat ait une conductivité équivalente à celle de l'eau ultrapure.

Le polymère final est isolé après lyophilisation avec un rendement de 87%.

Son taux de greffage déterminé par RMN ¹H est de 18%.
**RMN ¹H (D₂O, 400 MHz, 80 °C,** δ **(ppm))** : 1,59 (m, CH₂,CO-CH₂-CH₂-CH₂-CH₂-S), 1,91 (CH₃ groupement acétyle HA), 2,41 (m, CO-CH₂-CH₂-CH₂-CH₂-S, S-CH₂-CH₂-CO-NH), 2,41 (m, S-CH₂-CH₂-CO-NH), 3,20-4,00 (m, massif des protons des sucres du squelette HA et de la CD), 4,35-4,50 (m, protons anomères du HA), 4,97 (m, protons anomères de la CD).

### Exemple 4 : Synthèse d'un dérivé HA-RGD possédant un taux de greffage en motifs peptidiques de type RGD de 20 %.

A une solution de HA-pentènoate de masse M_{w} = 370000 g/mol et possédant un taux de greffage de 20 % (synthétisé selon l'exemple 1) dans de l'eau ultrapure (1,8 mL) (solution de HA-pentènoate à 1 % w/v) sous agitation, on ajoute le peptide de type RGD (MPA-gly-arg-gly-asp-ser provenant de la société Genecust, 0.005 g, 0.0086 mmol). Le mélange est ensuite additionné d'une solution d'Irgacure 2959 à 1 % (w/v) dans le PBS (0,1 mL, tampon phosphate salin, NaCl 0,15 M, pH 7,4). Le mélange réactionnel est alors transféré dans une cellule en quartz et irradié pendant 5 minutes à une longueur d'onde λ = 365 nm.

La solution est ensuite transférée pour l'étape de diafiltration (membrane Amicon YM10 de seuil de coupure 10000 Da) et lavée avec de l'eau ultrapure à 20 °C jusqu'à ce que le perméat ait une conductivité équivalente à celle de l'eau ultrapure.

Le polymère final est isolé après lyophilisation avec un rendement de 76%.

Son taux de greffage déterminé par RMN ¹H est de 20%.
**RMN ¹H (D₂O, 400 MHz, 80 °C,** δ **(ppm))** : 1,54-1,67 (m, 3 CH₂ arginine), 2,53 (m, CH₂CO, mercatopropionamide), 2,73 (m, CH₂ acide aspartique), 3,11 (t, CH₂S), 3,20-4,00 (m, massif des protons des sucres du squelette HA, CH₂ glycine, CH₂ sérine), 4,24-4.66 (m, protons anomères du HA, CH arginine, CH acide aspartique, CH sérine).

### Exemple 5 : Synthèse d'un dérivé HA-pentane possédant un taux de greffage en chaîne pentane de 20 %.

A une solution de HA-pentènoate possédant un taux de greffage de 20 % (synthétisé selon l'exemple 1) dans un mélange eau ultrapure/éthanol (3/2, v/v, 5 mL) (solution de HA-pentènoate à 1 % w/v) sous agitation, on ajoute le 1-pentanethiol (0.012 g, 0.119 mmol). Le mélange est ensuite additionné d'une solution d'Irgacure 2959 à 1 % (w/v) dans un mélange eau/éthanol (3/2, v/v, 0,1 mL). Le mélange réactionnel est alors transféré dans une cellule en quartz et irradié pendant 10 minutes à une longueur d'onde λ = 365 nm.

La solution est ensuite transférée pour l'étape de diafiltration (membrane Amicon YM10 de seuil de coupure 10000 Da) et lavée avec un mélange eau ultrapure/éthanol (3/2, v/v) à 20 °C jusqu'à ce que le perméat ait une conductivité équivalente à celle de l'eau ultrapure.

Le polymère final est isolé après lyophilisation avec un rendement de 75%.

Son taux de greffage déterminé par RMN ¹H est de 20 %.
**RMN ¹H (D₂O, 400 MHz, 80 °C,** δ **(ppm))** : 0,77 (t, S-(CH₂)₄-CH₃), 1,23 (m, S-CH₂-CH₂-CH₂-CH₂-CH₃), 1,50 (m, CO-CH₂ -CH₂- CH₂-CH₂-S, S-CH₂-CH₂-CH₂-CH₂-CH₃), 1,91 (CH₃ groupement acétyle HA), 2,48 (m, CO-CH₂-CH₂-CH₂-CH₂-S, S-CH₂-CH₂-CH₂-CH₂-CH₃), 3,10-4,00 (m, massif des protons des sucres du squelette HA), 4,34-4,55 (m, protons anomères du HA).

### Exemple 6 : Synthèse d'un dérivé dextrane-cyclodextrine possédant un taux de greffage en β-cyclodextrine (CD) de 10 %.

A une solution de dextrane-pentènoate de masse M_{w} ∼ 200000 g/mol et possédant un taux de greffage de 20 % (synthétisé selon l'exemple 2) dans de l'eau ultrapure (2 mL) (solution de dextrane-pentènoate à 1 % w/v) sous agitation, on ajoute le 6^{l}-mercaptopropionylamido-6^{l}-deoxycyclomaltoheptaose (0.027 g, 0.00224 mmol). Le mélange est ensuite additionné d'une solution d'Irgacure 2959 à 1 % (w/v) dans le PBS (0,1 mL, tampon phosphate salin, NaCl 0,15 M, pH 7,4). Le mélange réactionnel est alors transféré dans une cellule en quartz et irradié pendant 5 minutes à une longueur d'onde λ=365 nm.

La solution est ensuite transférée pour l'étape de diafiltration (membrane Amicon YM10 de seuil de coupure 10000 Da) et lavée avec de l'eau ultrapure à 20 °C jusqu'à ce que le perméat ait une conductivité équivalente à celle de l'eau ultrapure.

Le polymère final est isolé après lyophilisation avec un rendement de 100%.

Son taux de greffage déterminé par RMN ¹H est de 10%.
**RMN ¹H (D₂O, 400 MHz, 80 °C,** δ **(ppm))** : 1,64 (m, CO-CH₂-CH₂-CH₂-CH₂-S), 2,40-2,50 (m, CO-CH₂-CH₂-CH₂-CH₂-S, S-CH₂-CH₂-CO-NH), 2,72 (m, S-CH₂-CH₂-CO-NH), 3,20-4,00 (m, massif des protons des sucres du squelette dextrane et de la CD), 4,88 (m, protons anomères du dextrane), 4,99 (m, protons anomères de la β-CD).

### Exemple 7 : Synthèses hydrogels chimiques à base d'acide hyaluronique

Lorsque les dérivés HA-pentènoate sont mis en présence de composés possédant plusieurs fonctions thiol (poly(éthylène glycol) dithiol (PEG-(SH)₂, Mw = 3600 g/mol, provenant de la société Shearwater) de Formule suivante, 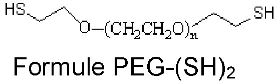 ou poly(éthylène glycol) tétrathiol (PEG-(SH)₄, M_{w} = 2200 g/mol provenant de la société Shearwater) de Formule suivante 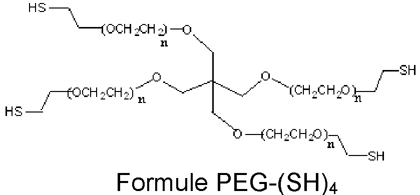 on observe la formation d'hydrogels chimiques par irradiation UV. Celle-ci a été suivie par photorhéologie (Rhéomètre AR2000 Ex, TA Instruments) tel que présenté en Figue 1.

Cette figure 1 représente la variation du module de conservation, G', en fonction du temps à 25 °C pour différents mélanges HA-pentènoate / PEG-(SH)₄ et HA-pentènoate / PEG-(SH)₂ préparés à partir de dérivés HA-pentènoate ayant un taux de greffage de 8 % (noté HA-pent (DS = 0.08)) ou de 25 % (noté HA-pent (DS = 0.25)). Les dérivés PEG-(SH)₄ (M_{w} = 2200 g/mol) et PEG-(SH)₂ (M_{w} = 3600 g/mol) proviennent de Shearwater. Le rayonnement UV est activé 1 min après le début des mesures du module G' effectuées à une fréquence fixe de 1 Hz. La concentration initiale de HA-pentènoate (M_{w} = 200000 g/mol) dans le PBS est de 15 g/L.

D'après cette Figure 1, le module de conservation (élastique), G', traduisant l'établissement de pontages chimiques interchaînes, croît de façon abrupte dès l'activation du rayonnement UV (λ = 365 nm, puissance: 144 mW/cm²) pour atteindre une valeur constante au bout de 5 min. Les valeurs des modules peuvent être modulées en fonction du rapport molaire thiol/pentènoate, du degré de substitution du HA-penténoate, de la nature du dérivé thiol et de la concentration en HA-penténoate.

## Revendications

1. Procédé de préparation d'un polysaccharide comprenant au moins un motif alcène greffé sur une fonction hydroxyle ou amine dudit polysaccharide, ledit motif alcène répondant à la formule A' suivante : 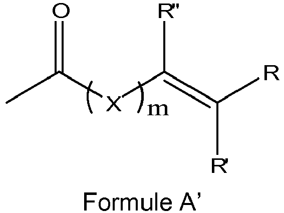 dans laquelle
- m représente un nombre entier allant de 1 à 10,
- X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle, notamment benzyle, et
- R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, en particulier R, R' et R" représentent chacun un atome d'hydrogène,
comprenant les étapes suivantes :
a) faire réagir un anhydride d'acide de Formule A suivante 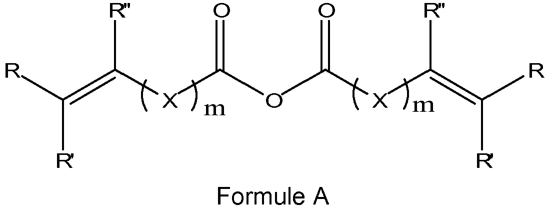 dans laquelle :
- m représente un nombre entier allant de 1 à 10,
- X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle, notamment benzyle, et
- R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle,
avec au moins un polysaccharide,
dans un solvant hydro-organique comprenant de l'eau et un solvant polaire aprotique ou un solvant polaire protique,
b) récupérer le polysaccharide comprenant un motif alcène greffé.

2. Procédé selon la revendication 1, **caractérisée en ce que** l'étape a) est effectuée dans un mélange eau/DMF, eau/DMSO ou eau/isopropanol.

3. Procédé selon la revendication 1 ou 2, **caractérisée en ce que** l'étape a) est effectuée à un pH allant de 6 à 11.

4. Procédé selon l'une des revendications 1-3 dans lequel à l'étape a) le taux de greffage molaire est modulé par la quantité d'anhydride ajoutée.

5. Procédé selon l'une des revendications 1-4 dans lequel le polysaccharide est choisi parmi les poly(galacturonate)s, l'héparine et ses dérivés, l'acide hyaluronique et ses dérivés, les chondroïtines sulfates, la pectine et ses dérivés, les alginates, et les polysaccharides neutres tels que la cellulose, le dextrane, le pullulane, l'amidon, la maltodextrine et leurs dérivés la chitine, le chitosane et leurs dérivés.

6. Procédé selon l'une des revendications 1-5 dans lequel le polysaccharide est l'acide hyaluronique.

7. Procédé de préparation d'un polysaccharide fonctionnalisé par au moins un motif thioéther greffé sur une fonction hydroxyle ou amine dudit polysaccharide, ledit motif répondant à la Formule C suivante : 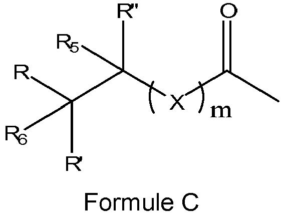 dans laquelle
- m représente un nombre entier allant de 1 à 10,
- X représente un motif du type CR₁R₂, dans lequel R₁ et R₂ représentent, indépendamment l'un de l'autre, un atome d'hydrogène, un atome d'halogène, un groupement alkylène, comprenant de 1 à 6 atomes de carbone, linéaire, ramifié ou cyclique, un groupement aryle, ou un groupement arylalkyle,
- R, R' et R" représentent, indépendamment l'un de l'autre, un atome d'hydrogène, un atome d'halogène, un radical alkyle, comprenant de 1 à 6 atomes de carbone, linéaire, ramifié ou cyclique, un groupement aryle, ou un groupement arylalkyle, en particulier R, R' et R" représentent chacun un atome d'hydrogène,
- R₅ et R₆ représentent pour l'un un atome de H et pour l'autre Rₜₕᵢₒ-S-, Rₜₕᵢₒ représentant un groupement comprenant au moins 1 atome de carbone,
comprenant les étapes suivantes :
a) préparation d'un polysaccharide comprenant au moins un motif alcène greffé sur une fonction hydroxyle ou amine dudit polysaccharide selon le procédé de préparation d'une des revendications 1-5,
b) faire réagir un composé thiol, Rₜₕᵢₒ-SH, via une réaction radicalaire avec le polysaccharide obtenu à l'étape précédente,
c) récupérer le polysaccharide fonctionnalisé.

8. Procédé selon la revendication 7, **caractérisé en ce que** la réaction radicalaire de l'étape b) est
- photo-amorcée, notamment par du 4-(2-hydroxyéthoxy)phényl-(2-hydroxy-2-propyl)cétone, ou
- amorcée par un amorceur soluble dans l'eau, sans UV, comme le dichlorhydrate de l'azobis-(2-méthylpropionamidine), ou le dichlorhydrate du 2,2'-Azobis[2-(2-imidazolin-2-yl)propane].

9. Procédé selon la revendication 7 ou 8, **caractérisé en ce que** l'étape b) est effectuée dans un solvant choisi parmi l'eau, un mélange eau/éthanol, eau/isopropanol, eau/DMF ou eau/DMSO.

10. Procédé selon l'une des revendications 7-9 dans lequel le polysaccharide est choisi parmi les poly(galacturonate)s, l'héparine et ses dérivés, l'acide hyaluronique et ses dérivés, les chondroïtines sulfates, la pectine et ses dérivés, les alginates, et les polysaccharides neutres tels que la cellulose, le dextrane, le pullulane, l'amidon, la maltodextrine et leurs dérivés la chitine, le chitosane et leurs dérivés.

11. Procédé selon l'une des revendications 7-10 dans lequel le polysaccharide est l'acide hyaluronique.

12. Procédé de réticulation de l'acide hyaluronique comprenant les étapes suivantes :
a) préparation d'un acide hyaluronique comprenant au moins un motif alcène greffé sur une fonction hydroxyle dudit acide hyaluronique selon le procédé de préparation d'une des revendications 1-5,
b) faire réagir un composé comprenant plusieurs fonctions thiol avec l'acide hyaluronique obtenu à l'étape précédente,
c) récupérer l'acide hyaluronique réticulé.

13. Procédé selon la revendication 12 dans lequel le composé comprenant plusieurs fonctions thiol est choisi parmi le poly(éthylène glycol) dithiol et le poly(éthylène) tétrathiol.

14. Procédé selon la revendication 12 ou 13 dans lequel l'étape b) comprend une irradiation UV.

15. Procédé selon l'une des revendications 12, 13 ou 14 comprenant en outre l'hydratation de l'acide hyaluronique pour former un hydrogel.

## Patentansprüche

1. Verfahren zur Herstellung eines Polysaccharids, umfassend zumindest eine Alkeneinheit, die auf eine Hydroxyl- oder Aminfunktion des Polysaccharids gepfropft ist, wobei die Alkeneinheit der folgenden Formel A' entspricht: 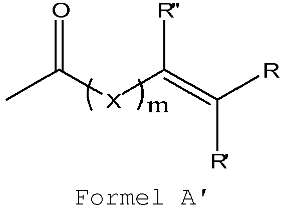 wobei
- m eine ganze Zahl von 1 bis 10 darstellt,
- X eine Einheit vom Typ CR₁R₂ darstellt, wobei R₁ und R₂ unabhängig voneinander ein Wasserstoffatom, ein Halogenatom, eine lineare, verzweigte oder zyklische Alkylengruppe umfassend 1 bis 6 Kohlenstoffatome, eine Arylgruppe oder eine Arylalkylgruppe, insbesondere Benzyl, darstellen, und
- R, R' und R" unabhängig voneinander ein Wasserstoffatom, ein Halogenatom, einen lineare, verzweigte oder zyklische Alkylrest umfassend 1 bis 6 Kohlenstoffatome, eine Arylgruppe oder eine Arylalkylgruppe, insbesondere R, R' und R" darstellen, die jeweils ein Wasserstoffatom darstellen,
umfassend die folgenden Schritte:
a) Umsetzen eines Säureanhydrids der folgenden Formel A 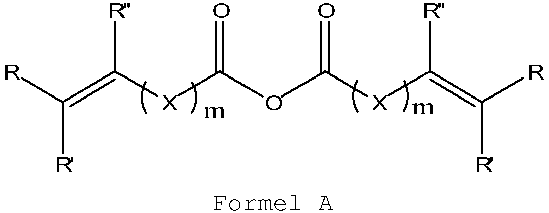 wobei:
- m eine ganze Zahl von 1 bis 10 darstellt,
- X eine Einheit vom Typ CR₁R₂ darstellt, wobei R₁ und R₂ unabhängig voneinander ein Wasserstoffatom, ein Halogenatom, eine lineare, verzweigte oder zyklische Alkylengruppe umfassend 1 bis 6 Kohlenstoffatome, eine Arylgruppe oder eine Arylalkylgruppe, insbesondere Benzyl, darstellen, und
- R, R' und R" unabhängig voneinander ein Wasserstoffatom, ein Halogenatom, einen lineare, verzweigte oder zyklische Alkylrest umfassend 1 bis 6 Kohlenstoffatome, eine Arylgruppe oder eine Arylalkylgruppe mit zumindest einem Polysaccharid
in einem hydroorganischen Lösungsmittel, umfassend Wasser und ein aprotisches polares Lösungsmittel oder ein protisches polares Lösungsmittel darstellen,
b) Gewinnen des Polysaccharids, das eine gepfropfte Alkeneinheit aufweist.

2. Verfahren nach Anspruch 1, **dadurch gekennzeichnet, dass** Schritt a) in einem Wasser/DMF-, Wasser/DMSO- oder Wasser/Isopropanol-Gemisch durchgeführt wird.

3. Verfahren nach Anspruch 1 oder 2, **dadurch gekennzeichnet, dass** Schritt a) bei einem pH-Wert im Bereich von 6 bis 11 durchgeführt wird.

4. Verfahren nach einem der Ansprüche 1 bis 3, wobei in Schritt a) das molare Pfropfverhältnis durch die zugegebene Anhydridmenge moduliert wird.

5. Verfahren nach einem der Ansprüche 1 bis 4, wobei das Polysaccharid unter den Poly(galacturonaten), Heparin und seinen Derivaten, Hyaluronsäure und ihren Derivaten, Chondroitinsulfaten, Pektin und seinen Derivaten, Alginaten und neutralen Polysacchariden wie Cellulose, Dextran, Pullulan, Stärke, Maltodextrin und deren Derivaten, Chitin, Chitosan und deren Derivaten ausgewählt ist.

6. Verfahren nach einem der Ansprüche 1 bis 5, wobei das Polysaccharid Hyaluronsäure ist.

7. Verfahren zur Herstellung eines Polysaccharids, das durch zumindest eine Thioethereinheit funktionalisiert ist, die auf eine Hydroxyl- oder Aminfunktion des Polysaccharids gepfropft ist, wobei die Einheit die folgende Formel C entspricht: 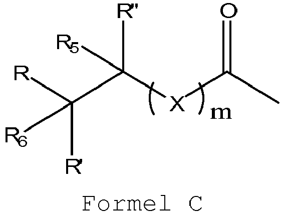 wobei
- m eine ganze Zahl von 1 bis 10 darstellt,
- X eine Einheit vom Typ CR₁R₂ darstellt, wobei R₁ und R₂ unabhängig voneinander ein Wasserstoffatom, ein Halogenatom, eine lineare, verzweigte oder zyklische Alkylengruppe umfassend 1 bis 6 Kohlenstoffatome, eine Arylgruppe oder eine Arylalkylgruppe darstellen,
- R, R' und R" unabhängig voneinander ein Wasserstoffatom, ein Halogenatom, einen lineare, verzweigte oder zyklische Alkylrest umfassend 1 bis 6 Kohlenstoffatome, eine Arylgruppe oder eine Arylalkylgruppe, insbesondere R, R' und R" darstellen, die jeweils ein Wasserstoffatom darstellen,
- von R₅ und R₆ eines ein H-Atom und das andere Rₜₕᵢₒ-S- darstellt, wobei Rₜₕᵢₒ eine Gruppe umfassend zumindest 1 Kohlenstoffatom darstellt,
umfassend die folgenden Schritte:
a) Herstellen eines Polysaccharids, umfassend zumindest eine Alkeneinheit, die auf eine Hydroxyl- oder Aminfunktion des Polysaccharids nach dem Verfahren zur Herstellung nach einem beliebigen der vorstehenden Ansprüche 1 bis 5 gepfropft ist,
b) Umsetzen einer Thiolverbindung, Rₜₕᵢₒ-SH, über eine Radikalreaktion mit dem im vorherigen Schritt erhaltenen Polysaccharid,
c) Gewinnen des funktionalisierten Polysaccharids.

8. Verfahren nach Anspruch 7, **dadurch gekennzeichnet, dass** die Radikalreaktion von Schritt b)
- photoinitiiert ist, insbesondere durch 4-(2-Hydroxyethoxy)phenyl-(2-hydroxy-2-propyl)keton, oder
- durch einen wasserlöslichen, UV-freien Initiator initiiert ist, wie Azobis-(2-methylpropionamidin)dihydrochlorid oder 2,2'-Azobis[2-(2-imidazolin-2-yl)propan]dihydrochlorid.

9. Verfahren nach Anspruch 7 oder 8, **dadurch gekennzeichnet, dass** Schritt b) in einem Lösungsmittel durchgeführt wird, das unter Wasser, einem Wasser/Ethanol-, Wasser/Isopropanol-, Wasser/DMF- oder Wasser/DMSO-Gemisch ausgewählt ist.

10. Verfahren nach einem der Ansprüche 7 bis 9, wobei das Polysaccharid unter Poly(galacturonate)n, Heparin und seinen Derivaten, Hyaluronsäure und ihren Derivaten, Chondroitinsulfaten, Pektin und seinen Derivaten, Alginaten und neutralen Polysacchariden wie Cellulose, Dextran, Pullulan, Stärke, Maltodextrin und deren Derivaten, Chitin, Chitosan und deren Derivaten ausgewählt ist.

11. Verfahren nach einem der Ansprüche 7 bis 10, wobei das Polysaccharid Hyaluronsäure ist.

12. Verfahren zur Vernetzung von Hyaluronsäure, umfassend die folgenden Schritte:
a) Herstellen einer Hyaluronsäure, umfassend zumindest eine Alkeneinheit, die auf eine Hydroxylfunktion der Hyaluronsäure gepfropft ist, nach dem Verfahren zur Herstellung nach einem der Ansprüche 1 bis 5,
b) Umsetzen einer Verbindung, die mehrere Thiolfunktionen mit der im vorherigen Schritt erhaltenen Hyaluronsäure umfasst,
c) Gewinnen der vernetzten Hyaluronsäure.

13. Verfahren nach Anspruch 12, wobei die Verbindung, die mehrere Thiolfunktionen umfasst, unter Poly(ethylenglykol)dithiol und Poly(ethylen)tetrathiol ausgewählt ist.

14. Verfahren nach Anspruch 12 oder 13, wobei Schritt b) eine UV-Bestrahlung umfasst.

15. Verfahren nach einem der Ansprüche 12, 13 oder 14, ferner umfassend die Hydrierung von Hyaluronsäure zur Bildung eines Hydrogels.

## Claims

1. A method for preparing a polysaccharide having at least one alkene unit grafted on a hydroxyl or amine functional group of said polysaccharide, said alkene unit corresponding to the following formula A': 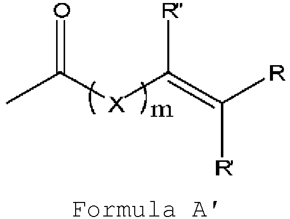 wherein
- m is an integer between 1 and 10,
- X is a CR₁R₂ unit, wherein R₁ and R₂ are each independently a hydrogen atom, a halogen atom, a linear, branched or cyclic alkylene group having from 1 to 6 carbon atoms, an aryl group, or an arylalkyl group, notably benzyl, and
- R, R' and R" are each independently a hydrogen atom, a halogen atom, a linear, branched or cyclic alkyl radical having from 1 to 6 carbon atoms, an aryl group, or an arylalkyl group, in particular R, R' and R" are each a hydrogen atom,
comprising the following steps:
a) reacting an acid anhydride of the following Formula A 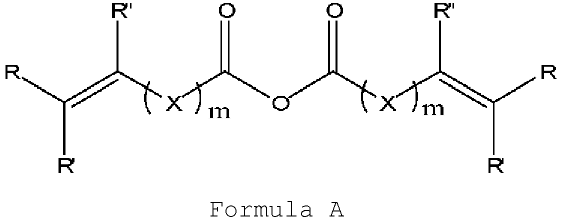 wherein:
- m is an integer between 1 and 10,
- X is a CR₁R₂ unit, wherein R₁ and R₂ are each independently a hydrogen atom, a halogen atom, a linear, branched or cyclic alkylene group having from 1 to 6 carbon atoms, an aryl group, or an arylalkyl group, notably benzyl, and
- R, R' and R" are each independently a hydrogen atom, a halogen atom, a linear, branched or cyclic alkyl radical having from 1 to 6 carbon atoms, an aryl group, or an arylalkyl group, with at least one polysaccharide,
in a hydro-organic solvent comprised of water and a polar aprotic solvent or a polar protic solvent,
b) recovering the polysaccharide including a grafted alkene unit.

2. The method according to claim 1, **characterized in that** step a) is carried out in a water/DMF, water/DMSO or water/isopropanol mixture.

3. The method according to claim 1 or 2, **characterized in that** step a) is carried out at a pH between 6 and 11.

4. The method according to one of claims 1 to 3 wherein in step a) the molar graft ratio is modulated by the quantity of anhydride added.

5. The method according to one of claims 1 to 4 wherein the polysaccharide is selected from poly(galacturonate)s, heparin and derivatives thereof, hyaluronic acid and derivatives thereof, chondroitin sulfates, pectin and derivatives thereof, alginates, and neutral polysaccharides such as cellulose, dextran, pullulan, starch, maltodextrin and derivatives thereof, chitin, chitosan and derivatives thereof.

6. The method according to one of claims 1 to 5 wherein the polysaccharide is hyaluronic acid.

7. A method for preparing a polysaccharide functionalized by at least one thioether unit grafted on a hydroxyl or amine functional group of said polysaccharide, said unit corresponding to the following Formula C: 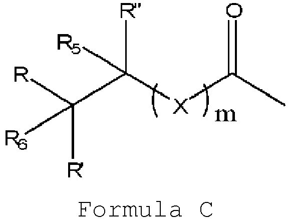 wherein
- m is an integer between 1 and 10,
- X is a CR₁R₂ unit, wherein R₁ and R₂ are each independently a hydrogen atom, a halogen atom, a linear, branched or cyclic alkylene group having from 1 to 6 carbon atoms, an aryl group, or an arylalkyl group,
- R, R' and R" are each independently a hydrogen atom, a halogen atom, a linear, branched or cyclic alkyl radical having from 1 to 6 carbon atoms, an aryl group, or an arylalkyl group, in particular R, R' and R" are each a hydrogen atom,
- R₅ or R₆ is a H atom and the other is Rₜₕᵢₒ-S-, Rₜₕᵢₒ being a group having at least 1 carbon atom,
comprising the following steps:
a) preparing a polysaccharide having at least one alkene unit grafted on a hydroxyl or amine functional group of said polysaccharide according to the preparation method of one of claims 1-5,
b) reacting a thiol compound, Rₜₕᵢₒ-SH, via a radical reaction with the polysaccharide obtained in the preceding step,
c) recovering the functionalized polysaccharide.

8. The method according to claim 7, **characterized in that** the radical reaction of step b) is
- photoinitiated, notably by 4-(2-hydroxyethoxy)phenyl-(2-hydroxy-2-propyl)ketone, or
- initiated by a water-soluble initiator, without UV light, such as azobis-(2-methylpropionamidine)dihydrochloride or 2,2'-Azobis[2-(2-imidazolin-2-yl)propane]dihydrochloride.

9. The method according to claim 7 or 8, **characterized in that** step b) is carried out in a solvent selected from water or a water/ethanol, water/isopropanol, water/DMF or water/DMSO mixture.

10. The method according to one of claims 7 to 9 wherein the polysaccharide is selected from poly(galacturonate)s, heparin and derivatives thereof, hyaluronic acid and derivatives thereof, chondroitin sulfates, pectin and derivatives thereof, alginates, and neutral polysaccharides such as cellulose, dextran, pullulan, starch, maltodextrin and derivatives thereof, chitin, chitosan and derivatives thereof.

11. The method according to one of claims 7 to 10 wherein the polysaccharide is hyaluronic acid.

12. A method for crosslinking hyaluronic acid comprising the following steps:
a) preparing a hyaluronic acid having at least one alkene unit grafted on a hydroxyl functional group of said hyaluronic acid according to the preparation method of one of claims 1-5,
b) reacting a compound including several thiol functional groups with the hyaluronic acid obtained in the preceding step,
(c) recovering the crosslinked hyaluronic acid.

13. The method according to claim 12 wherein the compound including several thiol functional groups is selected from poly(ethylene glycol) dithiol and poly(ethylene) tetrathiol.

14. The method according to claim 12 or 13 wherein step b) includes UV irradiation.

15. The method according to one of claims 12, 13 or 14 further including the hydration of hyaluronic acid to form a hydrogel.
